# EUROPEAN PATENT APPLICATION

(11) **EP 2 759 475 A2**
(43) Date of publication of application: **30.07.2014**
(21) Application number: 14152267.2
(22) Date of filing: 23.01.2014
(51) Int. Cl.: B64D 11/06

(54) **Passenger service device with signal transmission**

(30) Priority: 28.01.2013 US 201361757274 P
(71) Applicant: Zodiac Aerotechnics, 78373 Plaisir Cedex (FR)
(72) Inventor: Meckes, Rüdiger, 23919 Berkenthin (DE); Rittner, Wolfgang, 23623 Ahrensbök (DE); Boomgaarden, Günter, 23684 Scharbeutz (DE); Hoffmann, Frederik, 23617 Stockelsdorf (DE)
(74) Representative: Eisenführ Speiser

(57) **Abstract**

The invention relates to a passenger service device for providing entertainment or service to a passenger, comprising a first passenger service unit (50) adapted to be mounted in a ceiling compartment and a second passenger service unit(70) adapted to be mounted to a passenger seat (20). According to the invention, the service device comprises a transmission device comprising a first transmission unit (54) associated with the first passenger unit (50) and a second transmission unit (72) associated with the second passenger service unit (70), wherein said transmission device is adapted to transmit data between said first and second transmission unit (54,72) via visible or invisible light signals.

## Description

The invention relates to a passenger service device for providing entertainment or service to a passenger, comprising a first passenger service unit adapted to be mounted in a ceiling compartment and a second passenger service unit adapted to be mounted to a passenger seat.

Such passenger services devices are often used on board of aircraft, trains or busses to provide entertainment or service to passenger. Such entertainment or service may be video or audio signals, airflow for climate control or service functions like warning signals in emergency situations or signals to be activated for requesting assistance by service personal.

General, for several reasons, entertainment and service devices for providing such entertainment and services are arranged in a passenger service unit which is mounted in a cealing compartment or otherwise arranged above the passenger. This allows a convenient orientation of light from a reading light included in said passenger service unit, airflow from an airflow nozzl, audio signals or video signals from a display.

Whereas in many embodiments such entertainment or service is controlled by an user interface arranged in the first passenger service unit itself it may be useful to provide a separate second passenger service unit is provided which can be better reached by the passenger than the first passenger service unit arranged above the passenger. Whereas by such an arrangement a convenient way to control the entertainment and service provided by the passenger service device is available to the passenger, the distant arrangement of the two passenger service units it significantly increases the maintenance and installation costs of the device. Further, regular signal transmission via a signal line or regular wireless transmission is problematic on board of an aircraft or train or bus since a large number of signal lines is already installed in such vehicles and further a large number of wireless transmission devices is present for various purposes.

There is a need for a passenger service device allowing to provide entertainment and services to a passenger and to further provide a convenient way to control such entertainment and service in a configuration reducing the costs for installation and maintenance and avoiding the risk to interfere other signal lines or wireless transmissions on board of an aircraft, train or bus in which the passenger service device is installed.

This problem is solved by a passenger service device as explained in the introductory portion which further comprises a transmission device comprising a first transmission unit associated with the first passenger unit and a second transmission unit associated with the second passenger service unit, wherein said transmission device is adapted to transmit data between said first and second transmission unit via visible or invisible light signals.

According to the invention a specific arrangement of a passage service device comprising two passenger service units is provided. The two passenger service units are equipped for data transmission with each other. This data transmission may comprise a one way data transmission from one of the two units being a sender to the other unit being a receiver only or may comprise both units being sender and receiver for such data transmission. According to the invention, the data is transferred via light signals from one unit to the other unit. This specific sort of data transmission addresses problems arising inside vehicles for transporting passengers, in particular inside aircraft cabin. Generally, transmission of data via signal lines is a secure way free of disturbance or interference but requires high installation costs and produces additional weight to the passenger service device depending on the length of the signal lines. For data transmission via usual wireless transmission methods it has been found to be problematic that interference and disturbance of such data transmission can occur thus leading to failure of the transmission of the data. Further, usual wireless transmission may negatively affect systems installed on board of an aircraft, train or the like thus resulting in failed data transmission in essential systems of the aircraft, train or the like. By providing a signal transmission via light signals a light weight transmission system is provided which is secure against disturbance or interference by other wireless transmission systems used on board of the aircraft, train or bus and which further does not affect any data transmission or essential functions of the aircraft, train or bus.

According to the invention, visible light shall comprise electromagnetic waves visible to the human eye and further comprise electro magnetic waves in the neighborhood of this visible light, namely infrared or ultraviolet light.

According to a first preferred embodiment said second passenger service unit comprises an user interface for controlling a flow of air ventilation of an air ventilation device, a reading light, a loudspeaker, a display device, and/or a cabin attendant call. This specific arrangement allows a passenger to conveniently control any or a plurality of the listed devices which provide entertainment or service to the passenger during traveling. By arranging the second passenger service unit in a passenger seat which might be the seat of the passenger using the device or the seat in front of the passenger using the device it is much easier for the passenger to reach the user interface than if the user interface would be arranged as a component of the first passenger service unit arranged above the passenger. The user interface maybe one or a plurality of bottoms, switches or the like or may comprise or comprise a touch screen.

According to a further preferred embodiment said second transmission unit is adapted to send signals for controlling a flow of air ventilation of an air ventilation device, a reading light, a loudspeaker, a display device, and/or a cabin attendant call to the first transmission unit. According to this embodiment, the second transmission unit is adapted to send respective control signals for any or a plurality of the listed devices to the first transmission unit thus allowing to control said devices without the need of a data transmission via a signal line or a regular wireless transmission by using the transmission via visible or invisible light signals.

According to a further preferred embodiment, said a second transmission unit is adapted to receive signals about the status of a flow of air ventilation of an air ventilation device, a reading light, a loudspeaker, a display device, and/or a cabin attendant call from the first transmission unit. According to this embodiment the second transmission unit receives signals about the status of activation or any parameter of activation of any of the listed devices or a plurality thereof. By this, the second transmission unit may provide such status signals to a display device comprised in the second passenger service unit thus allowing to display information about the status of any of the devices to the passenger. By this, the passenger could be informed about the flow rate of air ventilation, the volume of a loudspeaker or maybe provided with binary signals like activation or deactivation of a cabin attendant call, activation or deactivation of a reading light or the like.

According to a further preferred embodiment, said first passenger service unit comprises an air ventilation device, a reading light, a loudspeaker, a display device, and/or a cabin attendant call device. This specific embodiment provides for an arrangement of any or a plurality of the listed devices in the first passenger service unit above the passenger. The arrangement of these devices above the passenger is particularly useful since the entertainment and services provided by these devices can be at best been provided from above the passenger. It is to be understood that the invention, however, may comprise other types of distribution of the entertainment and service devices, in particular it is comprised that some of the listed devices could be arranged in the second passenger service unit and some of the control devices could be arranged in the first passenger service unit.

According to a further preferred embodiment the transmission device is adapted to transmit a signal for releasing and/or activating an emergency oxygen device. Usually the activation of an emergency oxygen device is controlled via a centralized automated control detecting a drop in cabin pressure or a lack of oxygen or presence of smoke inside the cabin of an aircraft. However, in particular conditions or arrangements it might be useful to allow a passenger to control activation of such an emergency oxygen device by himself or to allow a passenger to send a request for activation of such emergency oxygen device to a crew member via said transmission device.

In particular, it is preferred that said second transmission unit is adapted to send a signal for releasing and/or activating an emergency oxygen device to the first transmission unit. In such case, the activation of the emergency oxygen device can be conveniently made by the passenger by reaching to the second passenger service unit nearby and by thus activating the release of an oxygen mask out of the first passenger service unit in the sealing compartment and/or the activation of the oxygen flow.

According to a further preferred embodiment said first or said second transmission unit is adapted for transmission of signals to/from a personal digital assistant like e.g. a smart phone or a tablet computer via a wired or a wireless signal transmission. This particular embodiment allows for data transmission to a digital device which may be provided to the passenger for the time of travelling or which may be a personal device of the passenger. This allows for convenient remote control of functions of the passenger service device via said personal digital assistant and further allow transmission of data to said personal digital assistant like e.g. transmitting video or audio signals for entertainment of the passenger. In particular, this embodiment is useful if a software like an application is provided and installed on said personal digital assistant wherein said software allows for a specific data exchange with the passenger service device thus providing additional service options to the passenger like flight booking, reservation, handling of data stored in a central storage device like cloud computer and the like.

According to a further preferred embodiment said second transmission unit comprises a handheld user interface comprising a light transmission element. Such handheld user device may be provided at the seat of the passenger and be held by the passenger in one hand to activate buttons, a touch screen or the like for controlling the entertainment and service devices. The handheld user interface may comprise the light transmission element for the transmission of data to the first passenger service unit. In such case, the angle of light emission shall be selected such that the passenger has a broad range of orientation angles of said handheld user interface to send and receive signals to/from said first transmission unit.

According to a further preferred embodiment said transmission device includes sender/receiver elements for transmitting signals at a wavelength between 280nm and 3000nm, in particular between 380nm and 780nm. These wave lengths define the visible and near visible electromagnetic wave lengths for light which maybe used for data transmission according to the invention. It is to be understood that the transmission device may use only one particular wave length out of this range and transmit signals by pulsed light transmission or may use a number of different wave lengths out of this range to transmit signals in a broadened frequency spectrum.

According to a further aspect of the invention a passenger service unit is provided comprising a service unit and adjusting means for adjusting said service unit which is characterized by an actuator coupled to said adjusting means.

Generally, it is known to provide service components for passenger of e.g. an aircraft with adjusting means for directing the flow of air out of an air ventilation nozzle or the direction of light of a reading light or for e.g. adjusting the air volume flowing through an air ventilation nozzle. Such adjusting means may be in the form of a spherical guiding and mounting device for an air ventilation nozzle or a reading light respectively. Further, such adjustment means may comprise throttle means in an air ventilation channel adapted for reducing the cross section of said channel to control the rate of airflow therethrough. Such adjustment means can be activated by the passenger manually in that the nozzle or reading light is pushed, rotated, turned or the like by hand.

However, such type of adjusting is not convenient for the passage and may even be impossible if the distance between the passenger and the service components is too far to allow reaching of the components from the passenger seat.

This problem is overcome by this aspect of the invention by an actuator coupled to the adjusting means. Said actuator is to be understood as a drive means connected to an energy source which thus is able to apply a force or a torque to the adjusting means for providing adjustment of said service component. This actuator allows for a remote control of the service component by the passenger in a convenient way thus avoiding the necessity for the passenger to reach to the service component for making adjustment to it. Generally, the coupling of the actuator to the adjusting means is to be understood as a mechanical coupling like e.g. by a transmission belt, a transmission gear, a lever or the like.

According to a preferred embodiment said service component is a ventilation nozzle and said adjusting means is a rotational guiding means for rotating said ventilation nozzle or a throttle means for adjusting the airflow through said ventilation nozzle and said actuator is coupled to said rotational guiding means or said throttle means for rotating said ventilation nozzle and for adjusting said airflow, respectively, and/or said service component is a reading light and said adjusting means is a rotational guiding means for rotating said reading light or a focusing means for adjusting the spot width of said reading light and said actuator is coupled to said rotational guiding means or said focusing means for rotating said reading light and for adjusting the spot width, respectively. By this preferred embodiment specific service components and adjustment means for these service components are provided wherein the adjustment means are actuated by a respective actuator separately. It is to be understood that a service component may be equipped with a single or a number of adjustment means, like e.g. for adjusting the direction and the volume of an airflow separately and independently from each other. In such case, each of the two adjustment means may be coupled with a single actuator thus allowing to independently actuate said adjusting means. Further, only one of the two adjustment means may be coupled to an actuator whereas the other remains adapted for manual adjustment by the passenger via direct application of manual force or the like.

According to a further preferred embodiment said actuator is a rotational actuator, a translational actuator or a combination of a rotational and a translational actuator. Generally, depending on the type of adjustment, the actuator may apply a rotational force (a torque) or a translational force (a linear force). In particular applications, a combination of the both may be usefull.

According to a further preferred embodiment said actuator is a shape memory alloy, a piezo drive, an electromagnetic drive, in particular an electromotor or a pull or press magnetic drive. Such actuators are particular useful since such actuators require only a small mount of energy and space and are light weight for specific use on board of an aircraft.

According to a further preferred embodiment said passenger service unit further comprises a second passenger service unit adapted to be mounted to a passenger seat and comprising a user interface, a transmission device comprising a first transmission unit associated with the passenger service unit and a second transmission unit associated with the second passenger service unit, wherein said transmission device is adapted to transmit data input via said user interface from said second to said first transmission unit to control said actuator. According to this embodiment the actuator or actuators of the passenger service unit can be controlled by a second passenger service unit which can be conveniently reached by the passenger and which is in a predetermined distance from the passenger service unit comprising the service components which are to be adjusted by the actuator. The second passenger service unit comprises a user interface which may be single or plurality of buttons, switches or the like or a touch screen. Said second passenger service unit comprises a second transmission unit which is adapted for data transmission to the first transmission unit comprised in the passenger service unit with the service components. By this, control signals input via the user interface can be transmitted to the service components in the passenger service unit which may e.g. be done via a signal line or a wireless signal transmission.

It is particularly preferred that a passenger service device comprising a first and a second passenger service unit is configured in such a way that an actuator is provided for actuating adjustment means of service components in the first passenger service unit wherein said actuator is controlled via said data transmitted between said first and second transmission unit via visible or invisible light signal. This allows for a specific and secure data transmission between the first and the second passenger service unit without the risk of disturbance or interference with any wireless conventional data transmission relevant for the systems of the aircraft, train or the like.

Preferred embodiments of the invention are explained with reference to the figures.
Figure 1 shows a first embodiment of the invention comprising a signal transmission between a first and a second passenger service unit.
Figure 2 shows a second embodiment of the invention comprising actuating means for adjusting service components for the passenger.

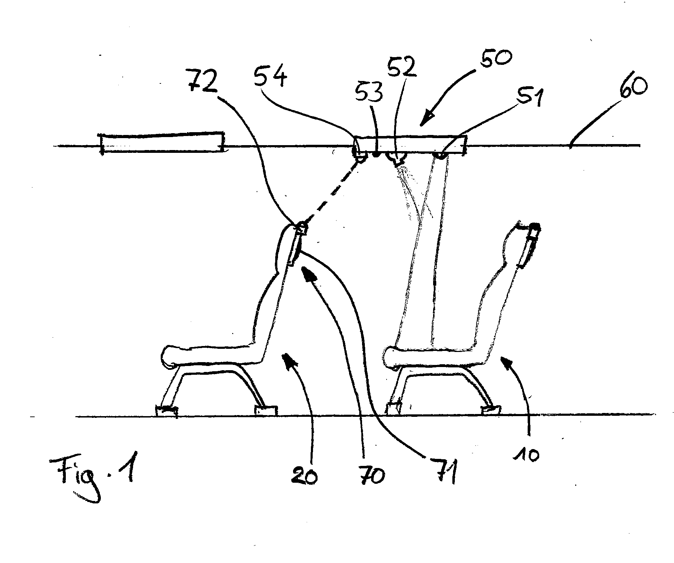

Referring first to figure 1, a section of an aircraft cabin is shown including two rows of passenger seats 10,20.

The passenger seats are mounted to a flour comprising rails for securely attaching these seats. A rails system is further provided above the seats to mount sealing components thereto.

Above the depicted rear seat 10 a first passenger service unit 50 is mounted to the ceiling compartment 60. This first passenger service unit comprises a reading light 51, a ventilation nozzle 52 and a cabin attendant call sign 53 for providing service to the passenger in the passenger seat 10.

In the upper part of the backside of the depicted front seat 20 a second service unit 70 is mounted. This second service unit 70 comprises a touch screen 71 which can be reached by the passenger sitting in the rear seat 10. The touch screen 71 provides virtual control buttons which can be activated by the passenger when touching the touch screen.

A transmission device is provided comprising a first sender/receiver unit 54 mounted to the first passenger service unit 50 and a second sender/receiver unit 72 mounted to the second passenger service unit. The sender/receiver units 54, 72 each comprise a light emitting component and a light receiving component and data means for processing signals to be sent or received by said light emitting or receiving components. In the embodiment depicted in figure 1, the light emitting component is a laser and the light receiving component is a photocell, wherein the laser is adjusted in such a way to directly point to the photocell.

The signal transmission unit 54 is coupled for providing control signals to the cabin attendant call sign 53, the ventilation nozzle 52 and the reading light 51 to control activation and operational parameters of these service components. The signal transmission unit 72 is coupled to the touch screen 71 for signal transmission to receive control signals and transmit status signals.

In practice, the passenger may input control commands via the touch screen 71 to activate e.g. the reading light 51. Such control command will be transmitted to the signal transmission unit 72 and then send via a light signal to the transmission unit 54. The transmission unit 54 processes this control command and transmits an activation signal to the reading light 51 for activating said reading light. In the same way, an activation or control signal could be provided to the ventilation nozzle 52 after a respective control command has been entered into the touch screen. Further, an operational status of the service component is transmitted via the signal transmission unit 54 to the signal transmission unit 72 to display the current status of the service component like e.g. the rate of airflow through the ventilation nozzle 52 to the passenger.

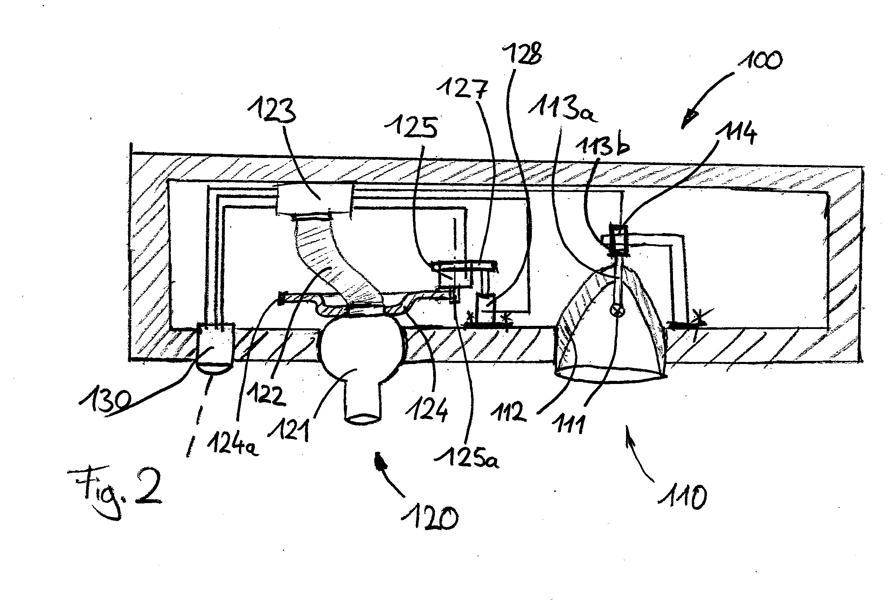

Referring now to figure 2, a passenger service unit is depicted which is adapted for being mounted into a ceiling compartment of an aircraft. The passenger service unit 100 comprises a reading light 110 and a ventilation nozzle 120. The reading light 110 is fixed to the housing of the passenger service unit. A light emitting diode 111 is arranged inside a reflector 112. The light emitting diode is mounted to a rod of a linear translation means 113a, b which are actuated by a magnetic drive 114 in cooperated into linear translation means. The magnetic drive is mounted to the housing of the passenger service unit and thus allows to actuate the guiding means in such a way that the light emitting diode 111 is moved into the focus or out of the focus of the reflector 112 to thereby adjust the diameter of the light beam emitted by said reading light 110.

The ventilation nozzle 120 comprises a nozzle element 121 which is spherically guided in the housing of the passenger service unit. The nozzle element 121 is connected via a flexible hose 122 to a manifold 123 for supplying and air flow to said nozzle component.

A swivel plate 124 is mounted to the upper side of said spherically guided nozzle element 121. The swivel plate 124 is equipped with a gear section 124a on its outer circumference said gear section being enabled by a toothed gear 125a of an servomotor 125. The servomotor 125 is mounted to a lever element 127 which can be actuated by a linear magnetic drive 128 to raise or lower the electro motor 125. By said raising or lowering action the swivel plate will be swiveled about a horizontal axis defined by the spherical guiding of the nozzle element 121.

By this, the direction of the air flowing out of the nozzle element 121 can be adjusted by actuating the swivel plate 124 using said servo motor 125 and said linear actuator 128.

The linear actuator 114, the linear actuator 128 and the servo motor 125 are connected via signal lines to a sender/receiver unit 130 mounted into the lower wall of the housing of the passenger service unit. Said sender/receiver unit is adapted to send and receive signals from a control unit via visible light. Thus, by sending signals to said sender/receiver unit 130 the actuators 125, 128, 114 of the passenger service unit depicted in figure 2 can be actuated to adjust the service components 110, 120.

## Claims

1. Passenger Service Device for providing entertainment or service to a passenger, comprising:
- a first passenger service unit adapted to be mounted in a ceiling compartment
- a second passenger service unit adapted to be mounted in a passenger seat,
**characterized by** a transmission device comprising a first transmission unit associated with the first passenger unit and a second transmission unit associated with the second passenger service unit, wherein said transmission device is adapted to transmit data between said first and second transmission unit via visible or invisible light signals.

2. Passenger Service Device according to claim 1,
wherein said second passenger service unit comprises an user interface for controlling
- a flow of air ventilation of an air ventilation device,
- a reading light,
- a loudspeaker,
- a display device, and/or
- a cabin attendant call.

3. Passenger Service Device according to claim 2,
wherein said a second transmission unit is adapted to send signals for controlling
- a flow of air ventilation of an air ventilation device,
- a reading light,
- a loudspeaker,
- a display device, and/or
- a cabin attendant call
to the first transmission unit.

4. Passenger Service Device according to claim 2,
wherein said a second transmission unit is adapted to receive signals about the status of
- a flow of air ventilation of an air ventilation device,
- a reading light,
- a loudspeaker,
- a display device, and/or
- a cabin attendant call
from the first transmission unit.

5. Passenger Service Device according to any of the preceding claims,
wherein said a first passenger service unit comprises
- an air ventilation device,
- a reading light,
- a loudspeaker,
- a display device, and/or
- a cabin attendant call device.

6. Passenger Service Device according to any of the preceding claims,
wherein said transmission device is adapted to transmit a signal for releasing and/or activating an emergency oxygen device.

7. Passenger Service Device according to any of the preceding claims,
wherein said second transmission unit is adapted to send a signal for releasing and/or activating an emergency oxygen device to the first transmission unit.

8. Passenger Service Device according to any of the preceding claims,
wherein said first or said second transmission unit is adapted for transmission of signals to/from a personal digital assistant like e.g. a smart phone or a tablet computer via a wired or a wireless signal transmission.

9. Passenger Service Device according to any of the preceding claims,
wherein said second transmission unit comprises a handheld user interface comprising a light transmission element.

10. Passenger Service Device according to any of the preceding claims,
wherein said transmission device includes sender/receiver elements for transmitting signals at a wavelength between 280nm and 3000nm, in particular between 380nm and 780nm.

11. Passenger service unit, comprising a service component and adjusting means for adjusting said service component,
**characterized by** an actuator coupled to said adjusting means.

12. Passenger service unit according to claim 11,
wherein said service component is
- a ventilation nozzle and said adjusting means is a rotational guiding means for rotating said ventilation nozzle or a throttle means for adjusting the airflow through said ventilation nozzle and said actuator is coupled to said rotational guiding means or said throttle means for rotating said ventilation nozzle and for adjusting said airflow, respectively.
- a reading light and said adjusting means is a rotational guiding means for rotating said reading light or a focusing means for adjusting the spot width of said reading light and said actuator is coupled to said rotational guiding means or said focusing means for rotating said reading light and for adjusting the spot width, respectively.

13. Passenger service unit according to claim 11 or 12,
wherein said actuator is a rotational actuator, a translational actuator or a combination of a rotational and a translational actuator.

14. Passenger service unit according to any of the preceding claims 11-13,
wherein said actuator is
- a shape memory alloy,
- a piezo drive,
- an electromagnetic drive, in particular an electromotor or a pull or press magnetic drive.

15. Passenger service unit according to any of the preceding claims 11-14,
further comprising
- a second passenger service unit adapted to be mounted to a passenger seat and comprising a user interface,
- a transmission device comprising a first transmission unit associated with the passenger unit and a second transmission unit associated with the second passenger service unit,
- wherein said transmission device is adapted to transmit data input via said user interface from said second to said first transmission unit to control said actuator.

16. Passenger Service Device according to any of the preceding claims 1-10 wherein said first passenger service unit is configured according to any of the preceding claims 11-15 and said actuator is controlled via said data transmitted between said first and second transmission unit via visible or invisible light signals.

17. Method for providing entertainment or service to a passenger, comprising:
- Providing visible or acoustic information to the passenger via a first passenger service unit adapted to be mounted in a ceiling compartment
- Mounting a second passenger service unit in a passenger seat,
**characterized by** transmitting control data from a second transmission unit associated with the second passenger service unit to a first transmission unit associated with the first passenger service unit via visible or invisible light signals at a wavelength between 280nm and 3000nm, in particular between 380nm and 780nm.
